(19) **Europäisches Patentamt**

**European Patent Office**

**Office européen des brevets**

(11) **EP 0 735 385 B1**

(12) **EUROPEAN PATENT SPECIFICATION**

(45) Date of publication and mention
of the grant of the patent:
**26.09.2001 Bulletin 2001/39**

(51) Int Cl.$^7$: **G01V 3/10**

(21) Application number: **96200810.8**

(22) Date of filing: **26.03.1996**

(54) **Compensation for start-up transients**

Kompensation für Starttransienten

Compensation pour les transistoires de démarrage

(84) Designated Contracting States:
**DE FR GB**

(30) Priority: **31.03.1995 US 414328**
**31.03.1995 US 414329**

(43) Date of publication of application:
**02.10.1996 Bulletin 1996/40**

(73) Proprietor: **NEW HOLLAND BELGIUM N.V.**
**B-8210 Zedelgem (BE)**

(72) Inventor: **Strosser, Richard P.**
**Akron, PA 17540 (US)**

(74) Representative: **Vandenbroucke, Alberic et al**
**New Holland Belgium NV.**
**Patent Department**
**Leon Claeysstraat, 3A**
**8210 Zedelgem (BE)**

(56) References cited:
**DE-A- 4 129 113**      **US-A- 3 889 249**
**US-A- 4 531 118**      **US-A- 4 821 023**
**US-A- 4 854 113**

**Description**

The present invention relates to magnetic metal detectors of the type used in forage harvesters and other crop harvesting equipment. More particularly, the invention relates to a method and apparatus for automatically adapting the sensitivity of a metal detector to account for transient conditions influencing the magnitude of the output signal from the detector at the start of the feed mechanism.

It is conventional to provide harvesting machines such as forage harvesters with a metal detector for detecting tramp metal picked up from a field with crop material. A typical metal detector comprises means for generating a magnetic detection field through which the crop feed path extends, first and second detection coils disposed in the detection field, and first and second channels or detection circuits connected to the first and second detection coils, respectively. Tramp metal objects passing through the magnetic detection field disturb the detection field thus inducing an emf (electromotive force) across each detection coil. The emf induced across each coil is amplified and filtered by one of the detection circuits so as to produce two channel output signals which are each compared with a positive and a negative detection threshold value. If the magnitude of a channel output signal exceeds a threshold value, it is taken as an indication that tramp metal has been detected. The crop feed mechanism of the harvester is stopped so that the tramp metal is not transported into the cutter mechanism which chops the crop material.

The detection field, of necessity, is established in a region of the harvester having moving ferrous metal parts. Movement of the harvester parts in the detection field results in a noise component in the emf induced across the detection coils. Filters may be provided in the detection circuits to eliminate some, but not all, of the noise component. Therefore, it is conventional to set the detection thresholds at twice the average value of the noise component of each channel output signal so that the noise will not trigger a false indication that tramp metal has been detected in the crop feed path.

The noise generated by moving parts of the harvester varies. It is greatest at the time the crop feed mechanism is engaged and accelerating and drops to a lower value as the crop feed mechanism reaches its normal speed. The detection thresholds are therefore set at levels such as twice the start-up noise level to allow a safety factor. However, the sensitivity of the metal detector, that is, its ability to detect tramp metal objects of smaller size, decreases as the detection thresholds are increased. If it were not for the start-up noise the detection thresholds could be set at lower levels, that is, at twice the noise level at the normal operating speed of the crop feed, thus increasing the sensitivity of the detector without increasing the chances of triggering a false indication that tramp metal has been detected.

In a metal detector system according to US patent US-A-5 600 942, the positive and negative peaks of the noise component of a channel output signal are filtered to provide average positive peak and average negative peak values of the noise component. The adaptive detection thresholds are then set and varied according to the average peak noise values. The average noise values are stored and updated in a flash ROM ($E^2$ FROM) so that they are available at system wake-up. This permits the setting of the adaptive detection thresholds and the filters at the levels existing at the time of system shut-down. Therefore, it is not necessary to wait for the filters to long-term (8 min) average the peak noise signals before the adaptive thresholds are set. This creates a problem in that the adaptive detection thresholds are set for the noise components existing under running conditions and do not take into account the larger noise components which exist at the time the crop feed mechanism is started.

It is already known in the art to equip the feed mechanism of a harvester with a sensing device for sensing its speed and adapting the sensitivity of the metal detector accordingly. DE-A-41 29 113 discloses a metal detector system wherein the metal detector signal is fed to an amplifier having an amplification factor which is controlled by a speed sensor. The amplification factor is set at a lower level when a higher rotational speed of the feedrolls is sensed, in order to compensate for the higher noise levels which may be expected from the faster rotating components. However, such system does not provide for noise compensation at start-up conditions: under these circumstances the speeds are low, but the noise values are high, such that an adaptive amplifier system which increases the signal at low speeds will increase the risks of false detection signals.

Therefore it is an object of the present invention to provide a novel method and apparatus for improving the sensitivity of a metal detector in a harvester without increasing the likelihood of producing false detection signals due to noise.

Another object of the invention is to provide a metal detector wherein the probability of producing a false object detection signal at start-up is reduced.

According to one aspect of the present invention there is provided a method of operating a magnetic metal detector in an agricultural harvesting machine having moving parts including a crop feed mechanism, which induces a noise component in the detector output signal, said method comprising the steps of:

storing first and second threshold values in a non-volatile memory,

- said first threshold value corresponding to a first threshold level that said noise component of the detector output signal does not exceed while said crop feed mechanism is accelerating; and

- said second threshold value corresponding to a second, lower threshold level that said noise component of the detector output signal does not exceed while said crop feed mechanism is running at a steady speed;

sensing the start of acceleration when said crop feed mechanism is started;
when said start of acceleration is sensed, retrieving said first threshold value from said memory and using this first value for establishing said threshold at said first level;
after the crop feed mechanism has reached a steady running speed, retrieving said second threshold value from said memory and using this second value for establishing said threshold at said second, lower level;
comparing said detector output signal with said threshold and producing an output indication when a metal object makes the detector generate a signal which exceeds said established threshold; and
after the crop feed mechanism has reached a steady running speed, adapting said second threshold level to the average value of the magnitudes of the peaks of said noise component.

According to another aspect of the present invention, there is provided a metal detector system for a harvesting machine having movable parts including a crop feed mechanism for feeding crop material along a crop feed path,

said metal detector system being operable to detect the presence of metal objects passing along said crop feed path and comprising:
at least one detection coil disposed in a magnetic detection field and a channel connected thereto for producing a channel output signal including a noise component induced by moving parts of the harvesting machine;
a non-volatile memory for storing therein first and second threshold values,

- said first threshold value corresponding to a first threshold level that said noise component of the detector output signal does not exceed while said crop feed mechanism is accelerating; and
- said second threshold value corresponding to a second, lower threshold level that said noise component of the detector output signal does not exceed while said crop feed mechanism is running at a steady speed;

sensing means for sensing when said crop feed mechanism is started;
threshold establishing means responsive to said sensing means

- for retrieving said first threshold value from said memory and using this value for establishing said threshold at said first threshold level during the interval the sensing means sense the acceleration of the crop feed mechanism, and
- for retrieving said second threshold value from said memory and using this value for establishing said threshold at said second threshold level when the sensing means sense a steady running speed of the crop feed mechanism;

comparing means for comparing said output signal with the established threshold and producing an output indication when said output signal exceeds said threshold; a low pass filter for determining the average value of the magnitudes of the peaks of said noise component after the crop feed mechanism has reached a steady state; and threshold establishing means for adapting said second threshold level to said determined average value.

Advantageously the start of the crop feed mechanism may be sensed by comparing the magnitude of the output signal with a threshold at a low level. The threshold for the transient start-up signals may be dependent on the average peak of the noise component during prior intervals of acceleration of the crop feed mechanism.

Fig. 1 shows a forage harvester having a metal detector disposed in a crop feed roll adjacent the crop feed path;
Fig. 2 is a schematic circuit diagram for a two-channel metal detector;
Fig. 3 is a diagram used to explain the relationship between various threshold values and average positive and negative peaks of a channel noise signal;
Fig. 4 illustrates operations carried out by a microcomputer in executing an Adapt_Main1 routine;
Fig. 5 illustrates the waveform of a typical channel output signal before, during and immediately after the crop feed mechanism is started; and
Fig. 6 is a flow chart illustrating operations performed by the microcomputer of Fig. 2 to set the channel detection thresholds.

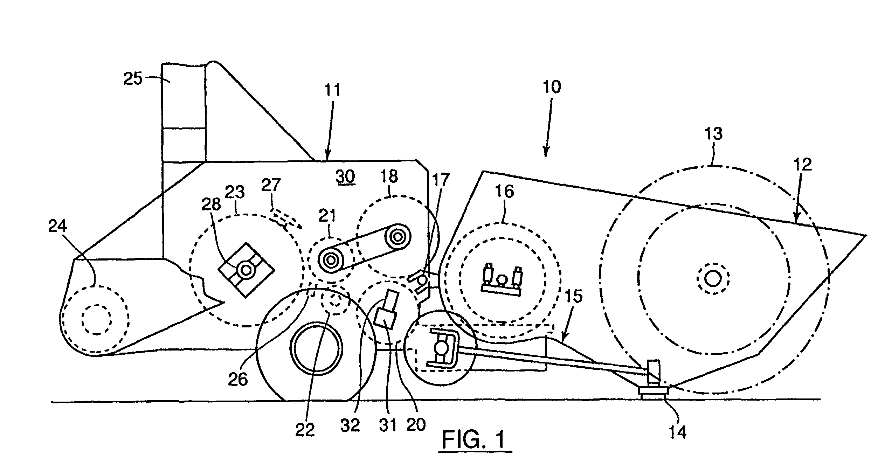

Fig. 1 illustrates a forage harvesting machine of the kind in which the present invention may be employed. It will be apparent that the invention may also be employed with benefit for the protection of other types of farm machinery, and that it has other monitoring and alarm actuating applications aside from protecting farm machinery from damage caused by the ingestion of metal objects. The forage harvester, generally designated by reference numeral 10, comprises a base unit 11 and an attachment 12 for gathering crop material and feeding it to the base unit for processing. Attachment 12 directly cuts crop material in the field and feeds it to base unit 11 where it is chopped and eventually conveyed to a trailing forage wagon (not shown). The attachment 12 includes a reel 13, depicted in phantom, which operates in a conventional manner to guide material over a cutter bar 14 and up an inclined floor 15 to a consolidating auger 16, also depicted in phantom outline. Attachment 12 is pivotally mounted to base unit 11 at 17 and is adapted to feed crop material to the space between upper and lower front feed rolls 18, 20 and then on to upper and lower rear feed rolls 21, 22 which in turn feed material to a cutterhead 23 (shown in phantom) which chops the crop material and guides it rearwardly to conveyor means 24 in a well known manner. The conveyor 24 commonly comprises an auger mounted traversely for feeding the chopped crop material to a blower unit which conveys it upwardly via a vertical spout 25 (partially shown) and then rearwardly to a trailing forage wagon.

The front and rear pairs of upper and lower feed rolls compress into a mat-like configuration the crop material which has been gathered by the attachment and consolidated by auger 16. The mat of material is fed rearwardly across the top surface of a shearbar 26 which is operatively associated with a series of cutting elements 27 (one of which is shown in phantom) on rotating cutterhead 23 journaled for rotation by mounting assembly 28 in sidewall 30 of base unit 11.

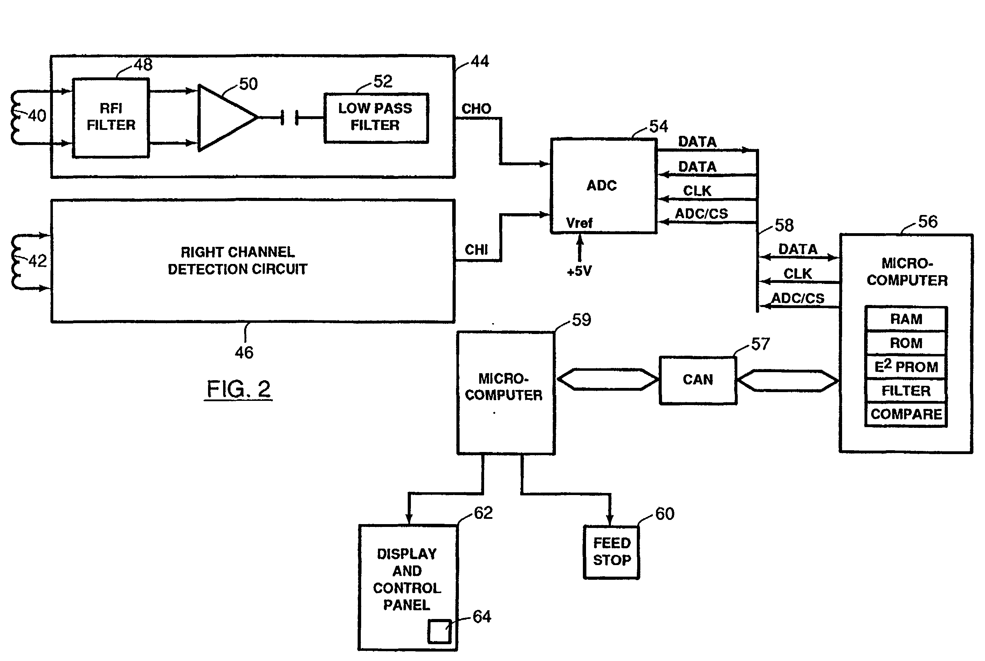

A magnetic metal detector system, indicated by numeral 32, is supported on a stationary shaft 31 within the lower front feed roll 20. In a preferred embodiment, the metal detector system comprises a two-channel detector having first and second detection coils 40, 42 (Fig. 2) disposed within a static magnetic detection field generated by suitable means such as permanent or electromagnets (not shown), the detection coils 40, 42 being connected to first and second channels or detection circuits 44, 46, respectively. The arrangement of the detection coils, detection circuits and the magnetic detection field may be as shown in US-A-4,433,528. The crop feed path extends through the magnetic detection field so that any ferrous metal object passing through the crop feed path disturbs the lines of flux in the detection field. The resulting flux change induces an emf in the detection coils 40, 42. The moving metal parts of the harvester also disturb the flux in the detection field and thus introduce a noise component into the output signals from channels 44, 46.

Detection circuit 44 comprises an RFI filter 48, a differential amplifier 50 and a low pass filter 52. It will be understood that detection circuit 46 includes components like those provided in detection circuit 44 hence only detection circuit 44 will be explained.

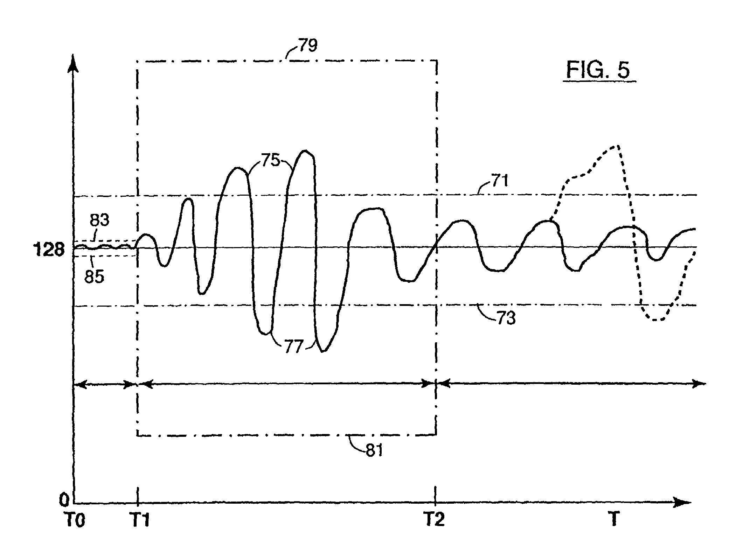

The first detection coil 40 is connected to RFI filter 48. The purpose of this filter is to filter out any radio frequency interference induced in detection coil 40. The output of filter 48 is connected to the differential amplifier 50 which amplifies the emf induced in detection coil 40. The output signal from amplifier 50 is applied to the low pass filter 52. The purpose of this filter is to filter out the higher frequency noise component induced in coil 40 by moving ferrous parts of the harvester while passing lower frequency components such as are induced in coil 40 by passage of a metal object through the detection field. The filter 52 cannot filter out all of the noise component from the channel detection signal, hence the output signal from detection circuit 44 (or 46) may have a wave form similar to that shown in Fig. 5 wherein the variations of low amplitude shown in solid line represent unfiltered noise and the larger positive and negative swings shown in phantom represent the sum of unfiltered noise and the signal induced a detection coil by passage of a metal object through the detection field.

The output signal of filter 52 is the first or left channel output signal CH0 and it is applied to one input of a multi-channel analog to digital converter (ADC) 54. The right channel output signal CH1 is applied to a second input of the ADC.

ADC 54 is controlled by a conventional microcomputer 56 having RAM, ROM and flash ROM (E$^2$ PROM) memories and a program controlled microprocessor. The microcomputer is connected to ADC 54 via a conventional serial data link or bus 58. The microcomputer 56 is connected through a serial data link 57 to a further microcomputer 59. Microcomputer 59 in turn is connected to a conventional stop means 60 for stopping the crop feed mechanism of the harvester when a tramp metal object is detected in the crop feed path, and to an operator's control panel 62 having manual input switches 64 and an alpha numeric display.

During normal operation, that is, when the metal detector is being operated to sense the passage of tramp metal through the crop feed path, the microcomputer 56 controls ADC 54 to sample the detector channel output signals CH0 and CH1 every 2.5 ms and produce digitized channel output signals which are transferred to the microcomputer. The ADC has a resolution of 256 steps (0-255) and is biased at 128. That is, when a detector channel output signal CH0 or CH1 is sampled by the ADC and has a 0 value, the ADC produces the digital value 128.

The detector channel output signals are bipolar. A metal object, either a machine part or tramp metal, entering the magnetic detection field disturbs the flux of the field so that an emf is induced across detection coils 40 and 42 thereby inducing current flows in first directions through the coils, and as the metal object exits from the detection field and the flux returns toward its original state an emf of opposite polarity is induced in each coil causing current flows in second directions through the coils. This causes differential amplifiers 50 in the channel detection circuits 44, 46 to produce output signals exhibiting positive and negative excursions. Thus, the magnitudes of the positive and negative excursions of the output signal from each channel must be tested in order to determine if a tramp metal object is passing through the detection field.

Each time a digitized sample of the magnitude of the left channel output signal CH0 is transferred to the microcomputer 56, it is compared with first and second adaptive threshold values ADAPT.LPOSTH and ADAPT. LNEGTH. These threshold values are derived as subsequently described and represent the minimum positive peak amplitude and minimum negative peak amplitude, respectively, that the signal CH0 must have for the system to produce a signal indicating detection of a tramp metal object. That is, if the signal CH0 has a positive peak value greater than the first threshold value ADAPT.LPOSTH or a negative peak value greater (more negative) than the second threshold value ADAPT.LNEGTH, it is assumed that a tramp metal object has been detected. The microcomputer 56 sends a control signal via serial link 57 and microcomputer 59 which energizes stop means 60 to stop the crop feed.

In like manner the digitized samples of the right channel output signal CH1 are transferred to microcomputer 56 and compared with third and fourth adaptive threshold values ADAPT.RPOSTH and ADAPT.RNEGTH.

It is desirable on one hand to set the positive and negative adaptive thresholds ADAPT.POSTH and ADAPT. NEGTH as close as possible to the no-signal state. This enhances the ability of the system to detect small metal objects, since the output signal from a channel is dependent in part on the size of the object detected. Stated differently, the sensitivity of a detector channel is increased as the adaptive thresholds are set closer to the no-signal level.

On the other hand, the noise component of the channel output signal limits how close the adaptive threshold levels may be to the no-signal level. If the adaptive thresholds are set too low, a peak of the noise component may exceed a threshold level and thus result in a false indication that a tramp metal object has been detected. The threshold levels must be selected to provide a safety margin between the threshold levels and the peaks of the noise components. However, as the metal parts of the harvester wear and introduce a larger noise component into the channel output signal this safety margin may be exceeded so that object detection may be falsely indicated.

In the present invention the adaptive detective thresholds with which the digitized channel output signals are compared, are varied or adapted to take into account long term variations in the average peak magnitudes, positive and negative, of the noise components in each channel.

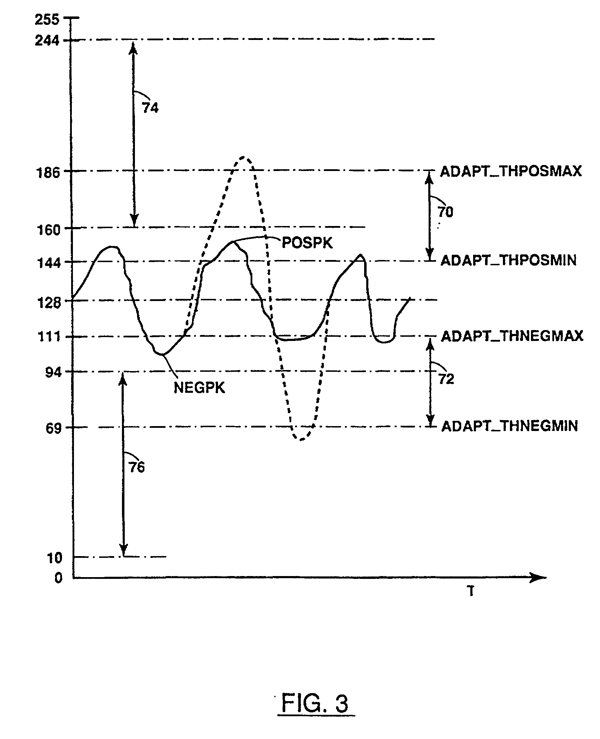

Referring again to Fig. 3, the microcomputer 56 establishes the adaptive detection threshold levels for one channel by taking 2500 samples of the noise component of the channel output signal and determining the positive peak (POSPK) and negative peak (NEGPK) of the noise component during the sampling interval (6.25 sec). The positive and negative peaks are then averaged by two single pole low pass filters to develop two values EEPROM_ADAPT_NEGPK and EEPROM_ADAPT_POSPK representing the average negative and positive peak values of the noise component over a long interval on the order of 8 minutes. The average positive peak value of the noise component is limited to the range indicated at 70 in Fig. 3 and the average negative peak value of the noise component is limited to the range indicated at 72 in Fig. 3.

Once microcomputer 56 determines the average positive peak value of the channel signal noise component, the positive adaptive detection threshold ADAPT.POSTH is set at twice the average positive peak value of the noise component. This provides a tolerance factor so that the noise component will not cause a false object detection indication if a given peak of the noise component is considerably higher than the average peak. Since the positive adaptive detection threshold is set at twice the average positive peak noise, and the average positive peak noise may vary within the range 70, the positive adaptive detection threshold ADAPT.POSTH may vary over the range 74, rising as the average positive peak noise rises and dropping to a lower level as the average positive peak noise drops.

Similarly, the negative adaptive threshold ADAPT.NEGTH is set at twice the average negative peak value of the channel noise component and varies over the range 76 as the average negative peak noise varies.

By individually adjusting the positive and negative adaptive detection thresholds according to variations in the average peak positive and negative noise components, the adaptive detection thresholds are set as close as possible to the no-signal level (bias in Fig. 3) thus enabling the sensitivity of the detector to be maintained at the highest level permitted by the current noise levels.

Microcomputer 56 executes three routines ADAPT_INIT, ADAPT_MAIN and ADAPT_MAIN1 to set the four adaptive detection thresholds ADAPT.LPOSTH, ADAPT.LNEGTH, ADAPT.RPOSTH and ADAPT.RNEGTH with which detector channel output signals are compared with in order to determine if a tramp metal object has been detected.

ADAPT_INIT is executed when power is turned on and initializes certain variables. Four average peak noise values EEPROM_ADAPT_LPOSPK, EEPROM_ADAPT_LNEGPK, EEPROM_ADAPT_RPOSPK and EEPROM_ADAPT_RNEGPK are retrieved from the $E^2$ PROM, multiplied by 16, and entered into the filter registers LPOSF, LNEGF, RPOSF and RNEGF. As will become evident from the following description, one of these values is updated in the $E^2$ PROM when the average peak noise, either positive or negative from a channel, varies by a predetermined amount so that at system shut-down the $E^2$ PROM holds the average peak noise values last produced by the long term filters. This restores the filter registers to the values last read from the registers before power shut-off.

Next, the microcomputer 56 loads the value 81 into a register ADAPT.SENSE. In this regard keys, represented at 64 in Fig. 2, are provided on the operator's control panel 62, so that the operator may add an offset or sensitivity value to the computer determined threshold values LPOSTH, LNEGTH, RPOSTH and RNEGTH. The offset is equal to 9 times (X-1) where X is the value keyed in by the operator. Maximum sensitivity is obtained when the value 9 is keyed in; hence loading the value 81 into ADAPT.SENS in effect selects maximum sensitivity.

After ADAPT.SENS is loaded, the microcomputer initializes the adaptive detection thresholds ADAPT. LPOSTH, ADAPT.LNEGTH, ADAPT.RPOSTH and ADAPT.RNEGTH, with which detection signals from the metal detector are compared. The thresholds are set to a value equal to twice the respective average peak noise plus the value of ADAPT.SENS provided the value does not exceed a maximum allowable threshold value. If the value exceeds the maximum allowable threshold value then the threshold is set to the maximum value.

The average peak noise values EEPROM_ADAPT_LPOSPK, EEPROM_ADAPT_LNEGPK, EPROM_ADAPT_RPOSPK and EEPROM_ADAPT_RNEGPK are retrieved from the E$^2$ PROM memory, multiplied by two and entered into threshold registers LPOSTH, LNEGTH, RPOSTH and RNEGTH, respectively.

Next, ADAPT.SENS is added to each of the values in LPOSTH, LNEGTH, RPOSTH and RNEGTH. Four threshold limit values, ADAPT_THPOSMAX, ADAPT_THPOSMIN, ADAPT_THNEGMAX and ADAPT_THNEGMIN, all offsets from the bias level 128, are then retrieved from non-volatile memory. These latter values represent the maximum and minimum, positive and negative values which the adaptive detection thresholds may have. Typical values are shown in Fig. 3 for purposes of illustration only. Each threshold limit value is multiplied by two and compared with the sum of ADAPT.SENS and the contents of one of the threshold registers LPOSTH, LNEGTH, RPOSTH or RNEGTH, all offsets from the bias level 128.

ADAPT_THPOSMAX is multiplied by two and compared to the sum of ADAPT.SENS and LPOSTH. If ADAPT. SENS plus LPOSTH is greater than ADAPT_THPOSMAX*2, then the adaptive ADAPT.LPOSTH is set to ADAPT_THPOSMAX*2, but if ADAPT.SENS plus LPOSTH is less than ADAPT_THPOSMAX*2 + 128 then ADAPT. LPOSTH is set to LPOSTH + ADAPT.SENS + 128.

ADAPT_THNEGMAX is multiplied by two and compared with the sum of ADAPT_SENS and LNEGTH. If ADAPT.SENS plus LNEGTH is greater than ADAPT_THNEGMAX*2, then the adaptive threshold ADAPT.LNEGTH is set to 128 - ADAPT_THNEGMAX*2 but if ADAPT_THNEGMAX*2 is greater than ADAPT.LNEGTH is set to 128 - LNEGTH - ADAPT.SENS.

From the above description it is seen that on system wake-up the routine ADAPT_INIT restores the filter registers to the values they held at system shut-down and also establishes the adaptive detection thresholds according to the average peak filter values (noise) at the time of system shut-down, taking into account any change in ADAPT. SENS made by the operator. The graph of Fig. 3 is drawn with the assumption that the operator-determined sensitivity factor is zero.

The routine ADAPT_MAIN routine is called every 2.5 ms on an interrupt basis. When the routine is entered, two registers LEFT an RIGHT hold the last digitized samples of the left and right channel output signals. ADAPT_MAIN detects the positive and negative machine noise peaks POSPK, NEGPK (Fig. 3) for each channel. The peak values are derived over a period of 6.25 sec from 2500 digitized samples of each channel output signal. The peak detection is qualified. If a channel output signal sample exceeds the current positive or negative adaptive threshold for that channel, it is assumed that the signal was generated by detection of a tramp metal object, not noise, and the signal is ignored. If the channel output signal sample is below a current minimum fixed threshold for that channel (stored in ROM), the signal is ignored on the assumption that the crop feed is not running. The qualification, in effect, eliminates from the sampling process all except noise signals with the range of magnitudes of noise signals occurring when the crop feed mechanism is running.

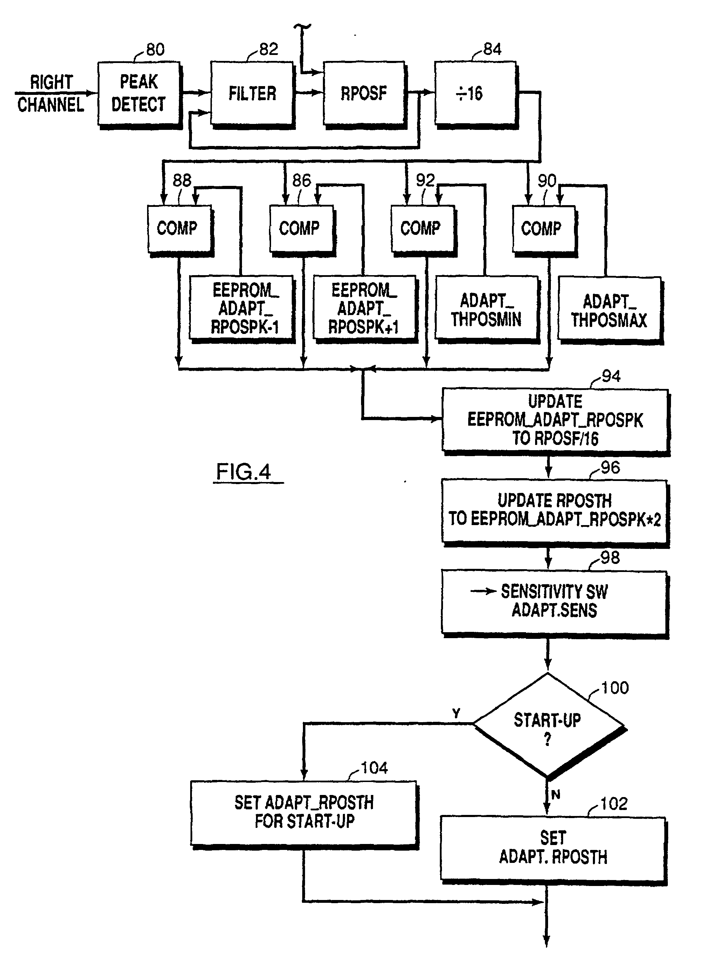

The routine ADAPT_MAIN1 is called on a non-interrupt basis about every 5 ms. The routine implements the four filters referred to above for filtering or long term (approximately 8 min) averaging of the positive and negative noise peaks of each channel determined during execution of ADAPT_MAIN. Fig. 4 schematically illustrates only the operations carried out with respect to the positive peak noise signals for the right channel. Similar operations are carried out with respect to the positive and negative peak noise signals for both channels.

In Fig. 4, the positive peak noise signals derived from peak detector 80 (implemented in ADAPT_MAIN) are applied to a filter 82 which averages the long term trend of the positive peak machine noise signals according to the formula:

$$Filter\_Value(t) = 1/2*Sample(t) + 31/32*Filter\_Value(t-1)$$

The output of the filter is held in a register RPOSF. As previously explained, ADAPT_INIT loads this register with EEPROM_ADAPT_RPOSPK on wake-up so that the long term filtering may continue from the point where it was interrupted at shut-down. The output of RPOSF is fed back to the filter to accomplish the averaging function.

The output of RPOSF is also divided by 16 as indicated at 84 and applied to comparators 86, 88, 90 and 92. Comparator 86 compares RPOSF/16 with EEPROM_ADAPT_RPOSPK + 1 and comparator 88 compares RPOSF/16 with EEPROM_ADAPT_RPOSPK - 1. Comparators 90 and 92 compare RPOSF/16 with ADAPT_THPOSMAX and ADAPT_THPOSMIN, respectively.

If RPOSF/16 is greater than EEPROM_ADAPT_RPOSPK + 1, or less than EEPROM_ADAPT_RPOSPK - 1, or equal to ADAPT_THPOSMAX or ADAPT_THPOSMIN, then EEPROM_ADAPT_RPOSPK is updated by loading it with RPOSF/16 (step 94).

The positive threshold register RPOSTH is then updated to EEPROM_ADAPT_RPOSPK*2 at step 96. Next, the operator sensitivity switch is sampled at step 98.

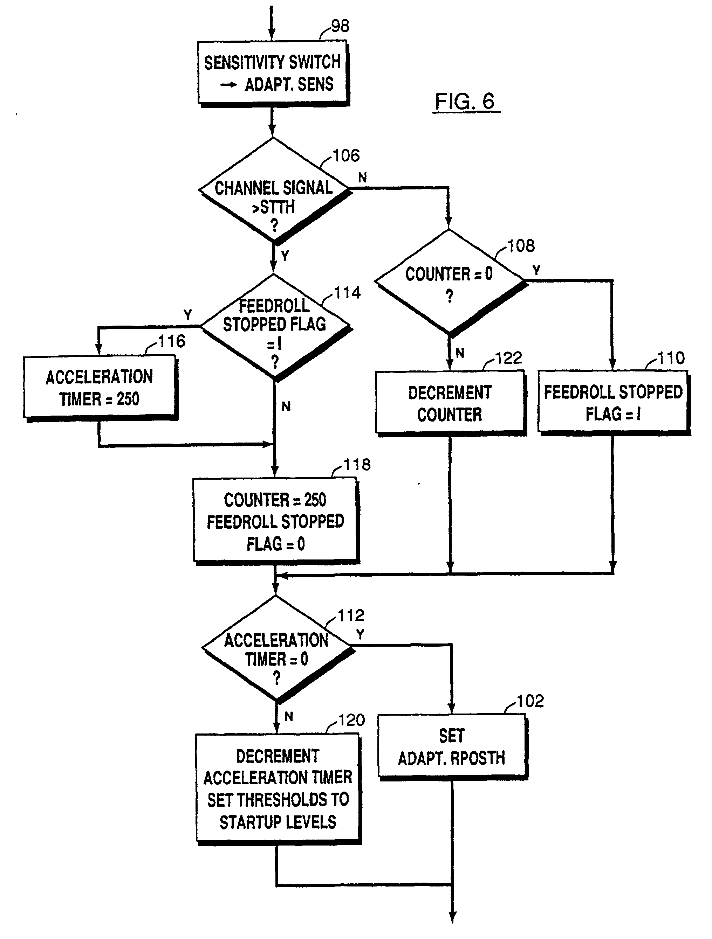

Step 100 determines from the digitized channel output signal if the crop feed mechanism has been engaged. As described further with respect to Fig. 6, the adaptive thresholds are set higher than normal during the interval the crop feed mechanism is accelerating because of the higher noise component in the channel output signals resulting from the accelerating parts of the mechanism. Step 104 accomplishes this function.

Assuming that the crop feed mechanism is not accelerating, positive adaptive detection threshold ADAPT. RPOSTH for the right channel is set at step 102. If RPOSTH + ADAPT.SENS is greater than ADAPT_THPOSMAX*2, then ADAPT.RPOSTH is set to ADAPT_THPOSMAX*2 + 128 and if it is not greater then ADAPT.RPOSTH is set to RPOSTH + 128 + ADAPT.SENS.

The negative adaptive threshold for the right channel and the positive and negative thresholds for the left channel are adaptively set in substantially the manner described above. With respect to the negative thresholds the threshold is set at step 102 to: 128 - ADAPT_THNEGMAX*2 if the subtraction of RNEGTH - ADAPT.SENS (or LNEGTH - ADAPT.SENS is greater than ADAPT_THNEGMAX*2, and to: 128 - LNEGTH + ADAPT.SENS) (or 128 - RNEGTH - ADAPT.SENS) if not.

Once an adaptive detection threshold ADAPT.RPOSTH, ADAPT.RNEGTH, ADAPT.LNEGTH or ADAPT. LPOSTH is updated it is used for comparison with all subsequent sample signals derived from its associated channel by ADC 54.

In Fig. 5 the positive adaptive detection threshold 71 and the negative adaptive detection threshold 73 are set at about twice the average positive peak value and average negative peak value of the noise component when the crop feed is at normal running speed.

When the system is shut down, the most recent average positive peak and average negative peak values are present in the E$^2$ PROM so that the filters and adaptive detection thresholds may be reset at power-up to the values they had at system shut-down.

Normally, the microcomputers 56 and 59 wake up when an ignition key on the harvester is turned on. The engine is started before the clutch for the crop feed mechanism is engaged. However, even though the crop feed mechanism is not engaged, there is a very small noise component present in the channel output signal. This small noise signal is shown in Fig. 5 in the interval T0 to T1.

When the crop feed mechanism is engaged at time T1, the noise component introduced into the channel output signals by the feed mechanism rises rapidly as the feed mechanism accelerates, and when the feed mechanism reaches its normal running speed (T2) the noise component drops but remains substantially greater than the noise during the interval T0-T1.

During the time the crop feed mechanism is accelerating, the positive and/or negative peaks of the noise component may exceed the positive and/or negative adaptive detection thresholds 71, 73 which have been established at twice the average peak noise during normal speed of the crop feed mechanism. In Fig. 5, the positive transient peaks 75 and negative transient peaks 77 exceed their corresponding threshold and any one of these peaks would trigger a false indication that a metal object has been detected.

In accordance with the present invention, the detection thresholds 71 and 73 are increased to higher start-up levels 79, 81, respectively, during the interval that the crop feed mechanism is accelerating. The levels 79, 81 may be predetermined values stored in ROM at the factory, the values being determined by testing the actual magnitudes of the noise components at start-up and adding a safety factor to the values obtained from the test.

Alternatively, and preferably, the start-up thresholds 79, 81 for each channel are adaptively set and varies in a manner similar to the way the adaptive detection thresholds 71 and 73 are set and varied. That is, during each start-up interval T1-T2, samples are taken of the channel output signals and positive and negative average start-up peak values of the noise component in each channel are determined and stored in the E$^2$ PROM. On a given start-up of the crop feed mechanism, the stored values of the filtered start-up noise averages are retrieved from the E$^2$ PROM to restore the filters, and the new peaks are averaged in. This has the advantage that the transient thresholds are automatically increased as aging parts of the crop feed mechanism induce an increasingly large noise component into the channel output signals.

Fig. 6 illustrates the steps performed by microcomputer 56 in setting the thresholds to take into account the large start-up transients. The steps 106-120 correspond to steps 100 and 104 of Fig. 4.

At step 106 of Fig. 6, the microcomputer compares the channel output signals with start thresholds STTH stored in ROM and chosen to be slightly above the noise levels which might be expected in the interval T0-T1 in Fig. 5. In a typical embodiment these thresholds may be set at the bias level $\pm$ 12. If an output signal exceeds either of the thresholds STTH (either 83 or 85 in Fig. 5) then at step 108 a counter is tested for a zero value. This counter is set to 250 at step 118 as subsequently described. The counter is reset during initialization and will be zero the first time step 108 is executed; so at step 110 a Feedroll Stopped flag is set and the routine advances to step 112 where an Acceleration Timer is tested for a zero value.

The Acceleration Timer is reset to zero during initialization and is set to 250 at step 116 as subsequently described. Since the Acceleration Timer contents are assumed to be zero, a branch is made to step 102 where the adaptive thresholds are set in the manner described above. To make the description of Fig. 6 consistent with the description of Fig. 4, step 102 indicates the setting of only the positive adaptive threshold for the right channel. It will be understood that the other thresholds are similarly set.

The routine of Fig. 6 is executed about every 5 ms on a non-interrupt basis. As long as the channel signal does not exceed either threshold, steps 100, 106, 108, 110, 112 and 102 are executed. These conditions correspond to the interval T0-T1 in Fig. 5.

When a channel output signal exceeds one of the thresholds STTH, as occurs at T1 in Fig. 5, the test at step 106 proves true. The Feedroll Stopped flag is tested (step 114) and since it is now set, the Acceleration Timer is set to the value 250 at step 116. The counter is also set to 250 (step 118).

Next, the Acceleration Timer is tested at step 112 and since it now contains a non-zero value, the routine advances to step 120 where the Acceleration Timer is decremented and the detection thresholds are set to the start-up levels indicated at 79 and 81 in Fig. 5, taking into account any sensitivity value in ADAPT.SENS.

From Fig. 5 it is obvious that once acceleration has begun the noise component of a channel only intermittently exceeds the thresholds during its oscillations about the bias value. The purpose of the counter tested at step 108 is to prevent the Feedroll Stopped flag from being set as the transient noise signal approaches and crosses the bias level.

Thus, during the acceleration interval the test at step 106 may or may not prove true. If it does not prove true, the counter is tested at step 108 and since it is not equal to zero, it is decremented at step 122. The Acceleration Timer is tested at step 112 and since it contains a non-zero count, it is decremented at step 120 and the detection thresholds are again set at the transient threshold levels 79 and 81.

If the test at step 106 does prove true then the Feedroll Stopped flag is tested (step 114) and since it has been reset, step 118 is executed to again set the counter to 250 and reset the Feedroll Stopped Flag (already reset). The Acceleration Timer is tested at step 112 and if it has not been decremented to zero, it is decremented at step 120 and the detection thresholds are again set at the transient threshold levels 79, 81.

It is the Acceleration Timer which times the interval of acceleration T1-T2 in Fig. 5. It will be noted in Fig. 6 that once the Acceleration Timer is set, it is decremented at step 120 regardless of whether the channel signal exceeds either of the threshold levels STTH. The counter prevents the Feedroll Stopped flag from being set once it has been reset. After being set, and subsequently reset, the Feedroll Stopped flag, tested at step 114 prevents the Acceleration Timer from being reloaded. Therefore, after about 1.25 s an execution of step 120 will reduce the count in Acceleration Timer to zero. On the next and subsequent executions of the routine the test of the Acceleration Timer at step 112 will prove true and the detection thresholds will be set (step 102) to the adaptive threshold levels 71, 73.

Although a specific preferred embodiment of the invention has been described in detail by way of illustration, various modifications and substitutions may be made in the described embodiment without departing from the spirit and scope of the invention as defined by the appended claims. For example, the start of acceleration may be determined by other means such as, for example by sensing movement of a part of the crop feed mechanism. It is also possible to sense the noise component in one channel during the interval T0-T3 to determine the start of acceleration, or even sense only the positive or negative peak of the noise signal during this interval.

**Claims**

1. A method of operating a magnetic metal detector (32) in an agricultural harvesting machine (10) having moving parts including a crop feed mechanism (18, 20-22), which induces a noise component in the detector output signal, said method comprising the steps of:

   storing first and second threshold values in a non-volatile memory,

   - said first threshold value corresponding to a first threshold level (79) that said noise component of the detector output signal does not exceed while said crop feed mechanism (18, 20-22) is accelerating; and

- said second threshold value corresponding to a second, lower threshold level (71) that said noise component of the detector output signal does not exceed while said crop feed mechanism (18, 20-22) is running at a steady speed;

sensing the start of acceleration when said crop feed mechanism (18, 20-22) is started;
when said start of acceleration is sensed, retrieving said first threshold value from said memory and using this first value for establishing said threshold at said first level (79);
after the crop feed mechanism (18, 20-22) has reached a steady running speed, retrieving said second threshold value from said memory and using this second value for establishing said threshold at said second, lower level (71);
comparing said detector output signal with said threshold and producing an output indication when a metal object makes the detector generate a signal which exceeds said established threshold; and
after the crop feed mechanism (18, 20-22) has reached a steady running speed, adapting said second threshold level to the average value of the magnitudes of the peaks (75) of said noise component.

2. A method according to claim 1, **characterized in that** the acceleration start sensing step comprises:

establishing said threshold at a third level (83) below said second level (71) and above the noise component which is generated while the crop feed mechanism is not running;
sensing the detector output signal;
comparing the magnitude of said signal with a threshold established at said third level (83); and
proceeding to said first threshold establishing step when said output magnitude exceeds said third level.

3. A method according to claim 1 or 2, **characterized in that** it further comprises:

after the start of acceleration has been sensed and the first threshold value has been retrieved, but before the second threshold value has been retrieved, sensing the noise component of the detector output signal;
determining the average value of the magnitudes of the peaks (75) of the noise component during this acceleration interval; and
storing the determined average value at the place of said first threshold value in said memory for retrieval during the next acceleration interval.

4. A method according to any of the preceding claims, **characterized in that** said threshold is established at said second level (71) after a predetermined time after the acceleration start of said crop feed mechanism (18, 20-22) has been sensed.

5. A method according to any of the preceding claims, **characterized in that**:

said noise component of said detector output signal varies between positive and negative values; and
said threshold is a threshold for the positive noise component of said detector signal; and
said method further comprises:

storing third and fourth threshold values in a non-volatile memory,

- said third threshold value corresponding to a fourth, negative threshold level (81) below which the negative noise component of the detector output signal does not go while said crop feed mechanism (18, 20-22) is accelerating; and
- said fourth threshold value corresponding to a fifth threshold level (73) below which said negative noise component of the detector output signal does not go while said crop feed mechanism (18, 20-22) is running at a steady speed;

when said start of acceleration is sensed, retrieving said third threshold value from said memory and using this third value for establishing said negative threshold at said fourth level (81);
after the crop feed mechanism (18, 20-22) has reached a steady running speed, retrieving said fourth threshold value from said memory and using this fourth value for establishing said negative threshold at said fifth level (73);
comparing said detector output signal with said threshold and producing an output indication when a metal object makes the detector generate a signal which goes below said established negative threshold; and

after the crop feed mechanism (18, 20-22) has reached a steady running speed, adapting said fifth threshold level to the average value of the magnitudes of the negative peaks (77) of said noise component.

**6.** A method according to any of the preceding claims, **characterized in that** said harvesting machine is a forage harvester (10) and said crop feed mechanism comprises upper and lower feed rolls (18, 20-21).

**7.** A metal detector system (32) for a harvesting machine (10) having movable parts including a crop feed mechanism (18, 20-22) for feeding crop material along a crop feed path,
said metal detector system (32) being operable to detect the presence of metal objects passing along said crop feed path and comprising:

at least one detection coil (40/42) disposed in a magnetic detection field and a channel (44/46) connected thereto for producing a channel output signal including a noise component induced by moving parts (18, 20-22) of the harvesting machine;
a non-volatile memory for storing therein first and second threshold values,

- said first threshold value corresponding to a first threshold level (79) that said noise component of the detector output signal does not exceed while said crop feed mechanism (18, 20-22) is accelerating; and
- said second threshold value corresponding to a second, lower threshold level (71) that said noise component of the detector output signal does not exceed while said crop feed mechanism (18, 20-22) is running at a steady speed;

sensing means (40/42, 44/46, 54, 56) for sensing when said crop feed mechanism (18, 20-22) is started;
threshold establishing means (56) responsive to said sensing means (40/42)

- for retrieving said first threshold value from said memory and using this value for establishing said threshold at said first threshold level (79) during the interval the sensing means sense the acceleration of the crop feed mechanism (18, 20-22), and
- for retrieving said second threshold value from said memory and using this value for establishing said threshold at said second threshold level (71) when the sensing means sense a steady running speed of the crop feed mechanism (18, 20-22);

comparing means (56) for comparing said output signal with the established threshold and producing an output indication when said output signal exceeds said threshold;
a low pass filter for determining the average value of the magnitudes of the peaks (75) of said noise component after the crop feed mechanism (18, 20-22) has reached a steady state; and
threshold establishing means (56) for adapting said second threshold level to said determined average value.

**8.** A system according to claim 7, **characterized in that** said sensing means comprises:

means (54, 56) for sensing said channel output signal; and
comparing means (56) for comparing said signal to a threshold established at a third level (83) below said second threshold level (71) but above the output signal which is generated while the crop feed mechanism (18, 20-22) is not running, and for generating an acceleration indication when said output signal exceeds said third threshold level (83).

**9.** A system according to claim 7 or 8, **characterized in that**:

said at least one detection coil (40/42) and said channel (44/46) are operable to produce a channel output signal varying between positive and negative values; and
said comparing means (56) comprise:

- means for comparing said output signal with a positive threshold level (71/79/83); and
- means for comparing said output signal with a negative threshold value (73/81/85); and
- means for producing an output indication when said channel output signal exceeds either of said threshold values.

**10.** A system according to any of the claims 7 to 9, **characterized in that** said harvesting machine is a forage harvester (10) and said crop feed mechanism comprises upper and lower feed rolls (18, 20-21).

**Patentansprüche**

1. Verfahren zum Betrieb eines magnetischen Metalldetektors (32) in einer landwirtschaftlichen Erntemaschine (10), die sich bewegende Teile unter Einschluß eines Erntematerial-Zuführungsmechanismus (18, 20-22) aufweist, der eine Störkomponente in dem Detektor-Ausgangssignal induziert, wobei das Verfahren die folgenden Schritte umfaßt:

   Speichern erster und zweiter Schwellenwerte in einem nichtflüchtigen Speicher,

   - wobei der erste Schwellenwert einem ersten Schwellenwert-Pegel (79) entspricht, den die Störkomponente des Detektor-Ausgangssignals während der Beschleunigung des Erntematerial-Zuführungsmechnismus (18, 20-22) nicht überschreitet, und

   - wobei der zweite Schwellenwert einem zweiten niedrigeren Schwellenwert-Pegel (71) entspricht, den die Störkomponente des Detektor-Ausgangssignals nicht überschreitet, während der Erntematerial-Zuführungsmechanismus (18, 20-22) bei einer stetigen Drehzahl läuft,

   Messen des Beginns der Beschleunigung, wenn der Erntematerial-Zuführungsmechanismus (18, 20-22) gestartet wird,

   Rückgewinnen des ersten Schwellenwertes aus dem Speicher und Verwenden dieses ersten Schwellenwertes zur Festlegung des Schwellenwertes auf den ersten Pegel (79), wenn der Beginn der Beschleunigung gemessen wird,

   Rückgewinnen des zweiten Schwellenwertes aus dem Speicher und Verwenden dieses zweiten Schwellenwertes zur Festlegung des Schwellenwertes auf den zweiten niedrigeren Pegel (71), nachdem der Erntematerial-Zuführungsmechanismus (18, 20-22) eine konstante Betriebsdrehzahl erreicht hat,

   Vergleichen des Detektor-Ausgangssignals mit dem Schwellenwert und Erzeugen einer Ausgangsanzeige, wenn ein metallischer Gegenstand dazu führt, daß der Detektor ein Signal erzeugt, das den festgelegten Schwellenwert übersteigt, und

   Anpassen des zweiten Schwellenwert-Pegels auf den Mittelwert der Amplituden der Spitzen (75) der Störkomponente, nachdem der Erntematerial-Zuführungsmechanismus (18, 20-22) eine stetige Drehzahl erreicht hat.

2. Verfahren nach Anspruch 1, **dadurch gekennzeichnet, daß** der Schritt der Messung des Beginns der Beschleunigung folgendes umfaßt:

   Festlegen des Schwellenwertes auf einen dritten Pegel (83) unterhalb des zweiten Pegels (71) und oberhalb der Störkomponente, die erzeugt wird, während der Erntematerial-Zuführungsmechanismus nicht läuft,

   Messen des Detektor-Ausgangssignals,

   Vergleichen der Amplitude des Signals mit einem Schwellenwert, der auf den dritten Pegel (83) festgelegt ist, und

   Übergang auf den ersten Schwellenwert-Festlegungsschritt, wenn die Ausgangsamplitude den dritten Pegel übersteigt.

3. Verfahren nach Anspruch 1 oder 2, **dadurch gekennzeichnet, daß** es weiterhin folgendes umfaßt:

   Messen der Störkomponente des Detektor-Ausgangssignals nach der Messung des Beginns der Beschleunigung und der Rückgewinnung des ersten Schwellenwertes, jedoch bevor der zweite Schwellenwert rückgewonnen wurde,

Bestimmen des Mittelwertes der Amplituden der Spitzen (75) der Störkomponente während dieses Beschleunigungsintervalls, und

Speichern des festgestellten Mittelwertes anstelle des ersten Schwellenwertes in dem Speicher zur Rückgewinnung während des nächsten Beschleunigungsintervalls.

4. Verfahren nach einem der vorhergehenden Ansprüche, **dadurch gekennzeichnet, daß** der Schwellenwert nach einer vorgegebenen Zeit nach der Messung des Beginns der Beschleunigung des Erntematerial-Zuführungsmechanismus (18, 20-22) auf den zweiten Pegel (71) festgelegt wird.

5. Verfahren nach einem der vorhergehenden Ansprüche, **dadurch gekennzeichnet, daß**:

sich die Störkomponente des Detektor-Ausgangssignals zwischen positiven und negativen Werten ändert, und

der Schwellenwert ein Schwellenwert für die positive Störkomponente des Detektorsignals ist, und

das Verfahren weiterhin folgendes umfaßt:

Speichern dritter und vierter Schwellenwerte in einem nichtflüchtigen Speicher,

- wobei der dritte Schwellenwert einem vierten negativen Schwellenwert-Pegel (81) entspricht, unter den die negative Störkomponente des Detektor-Ausgangssignals nicht absinkt, während der Erntematerial-Zuführungsmechanismus (18, 20-22) beschleunigt wird, und

- der vierte Schwellenwert einem fünften Schwellenwert-Pegel (73) entspricht, unter den die negative Störkomponente des Detektor-Ausgangssignals nicht absinkt, während der Erntematerial-Zuführungsmechanismus (18, 20-22) bei einer stetigen Drehzahl läuft,

Rückgewinnen des dritten Schwellenwertes aus dem Speicher und Verwenden dieses dritten Wertes zur Festlegung des negativen Schwellenwertes auf den vierten Pegel (81), wenn der Beginn der Beschleunigung gemessen wird,

Rückgewinnen des vierten Schwellenwertes aus dem Speicher und Verwenden dieses vierten Wertes zur Festlegung des negativen Schwellenwertes auf den fünften Pegel (73), nachdem der Erntematerial-Zuführungsmechanismus (18, 20-22) eine stetige Betriebsdrehzahl erreicht hat,

Vergleichen des Detektor-Ausgangssignals mit dem Schwellenwert und Erzeugen einer Ausgangsanzeige, wenn ein metallischer Fremdkörper bewirkt, daß der Detektor ein Signal erzeugt, das unter den festgelegten negativen Schwellenwert absinkt, und

Anpassen des fünften Schwellenwertpegels auf den Mittelwert der Amplituden der negativen Spitzen (77) der Störkomponente, nachdem der Erntematerial-Zuführungsmechanismus (18, 20-22) eine stetige Betriebsdrehzahl erreicht hat.

6. Verfahren nach einem der vorhergehenden Ansprüche, **dadurch gekennzeichnet, daß** die Erntemaschine ein Feldhäcksler (10) ist, und daß der Erntematerial-Zuführungsmechanismus obere und untere Zuführungswalzen (18, 20-21) aufweist.

7. Metalldetektorsystem (32) für eine Erntemaschine (10) mit beweglichen Teilen unter Einschluß eines Erntematerial-Zuführungsmechanismus (18, 20-22) zur Zuführung von Erntematerial entlang eines Erntematerial-Zuführungspfades,

wobei das Metalldetektorsystem (32) betreibbar ist, um das Vorhandensein von Metallgegenständen zu erfassen, die sich entlang des Erntematerial-Zuführungspfades bewegen, und folgendes umfaßt:

zumindest eine Detektionsspule (40/42), die in einem magnetischen Detektionsfeld angeordnet ist, und einen damit verbundenen Kanal (44/46) zur Erzeugung eines Kanal-Ausgangssignals, das eine Störkomponente einschließt, die durch sich bewegende Teile (18, 20-22) der Erntemaschine induziert wird,

einen nichtflüchtigen Speicher zum Speichern von ersten und zweiten Schwellenwerten in diesem,

- wobei der erste Schwellenwert einem ersten Schwellenwert-Pegel (79) entspricht, den die Störkomponente des Detektor-Ausgangssignals nicht überschreitet, während der Erntematerial-Zuführungsmechanismus (18, 20-22) beschleunigt wird, und

- wobei der zweite Schwellenwert einem zweiten niedrigeren Schwellenwert-Pegel (71) entspricht, den die Störkomponente des Detektor-Ausgangssignals nicht überschreitet, während der Erntematerial-Zuführungsmechanismus (18, 20-22) bei einer stetigen Drehzahl läuft,

Meßeinrichtungen (40/42, 44/46, 54, 56), die messen, wann der Erntematerial-Zuführungsmechanismus (18, 20-22) gestartet wird,

Schwellenwert-Festlegungseinrichtungen (56), die auf die Meßeinrichtungen (40/42) ansprechen,

- um den ersten Schwellenwert aus dem Speicher zurückzugewinnen und diesen Wert zur Festlegung des Schwellenwertes auf den ersten Schwellenwert-Pegel (79) während des Intervalls zu verwenden, zu dem die Meßeinrichtungen die Beschleunigung des Erntematerial-Zuführungsmechanismus (18, 20-22) messen, und um den zweiten Schwellenwert aus dem Speicher zurückzugewinnen und um diesen Wert zur Festlegung des Schwellenwertes auf den zweiten Schwellenwert-Pegel (71) zu verwenden, wenn die Meßeinrichtungen eine stetige Betriebsdrehzahl des Erntematerial-Zuführungsmechanismus messen,

Vergleichereinrichtungen (56) zum Vergleich des Ausgangssignals mit dem festgelegten Schwellenwert und zur Erzeugung einer Ausgangsanzeige, wenn das Ausgangssignal den Schwellenwert übersteigt,

ein Tiefpaßfilter zur Bestimmung des Mittelwertes der Amplituden der Spitzen (75) der Störkomponente, nachdem der Erntematerial-Zuführungsmechanismus (18, 20-22) einen stetigen Zustand erreicht hat, und

Schwellenwert-Festlegungseinrichtungen (56) zur Anpassung des zweiten Schwellenwert-Pegels an den so bestimmten Mittelwert.

8. System nach Anspruch 7, **dadurch gekennzeichnet, daß** die Meßeinrichtung folgendes umfaßt:

Einrichtungen (54, 56) zur Messung des Kanal-Ausgangssignals, und

Vergleichereinrichtungen (56) zum Vergleich des Signals mit einem Schwellenwert, der auf einen dritten Pegel (83) unterhalb des zweiten Schwellenwert-Pegels (71), jedoch oberhalb des Ausgangssignals festgelegt ist, das erzeugt wird, während der Erntematerial-Zuführungsmechanismus (18, 20-22) nicht läuft, und zur Erzeugung einer Beschleunigungsanzeige, wenn das Ausgangssignal den dritten Schwellenwert-Pegel (83) übersteigt.

9. System nach Anspruch 7 oder 8, **dadurch gekennzeichnet, daß**:

die zumindest eine Detektionsspule (40/42) und der Kanal (44/46) betreibbar sind, um ein Kanal-Ausgangssignal zu erzeugen, das sich zwischen positiven und negativen Werten ändert, und

die Vergleichereinrichtungen (56) folgendes umfassen:

- Einrichtungen zum Vergleich des Ausgangssignals mit einem positiven Schwellenwert-Pegel (71/79/83), und

- Einrichtungen zum Vergleich des Ausgangssignals mit einem negativen Schwellenwert (73/81/85), und

- Einrichtungen zur Erzeugung einer Ausgangsanzeige, wenn das Kanal-Ausgangssignal einen der Schwellenwerte übersteigt.

10. System nach einem der Ansprüche 7-9, **dadurch gekennzeichnet, daß** die Erntemaschine ein Feldhäcksler (10) ist, und daß der Erntematerial-Zuführungsmechanismus obere und untere Zuführungswalzen (18, 20-21) aufweist.

**Revendications**

1. Méthode de fonctionnement d'un détecteur de métaux magnétiques (32) dans une récolteuse agricole (10) possédant des pièces en mouvement incluant un mécanisme d'alimentation de matériau de récolte (18, 20-22), qui induit une composante de bruit de fond, ladite méthode comprenant les étapes:

   d'enregistrement de première et seconde valeurs de seuil dans une mémoire non volatile,

   - ladite première valeur de seuil correspondant à un premier niveau de seuil (79) que ladite composante de bruit du signal de sortie du détecteur ne peut pas dépasser pendant l'accélération du mécanisme d'alimentation de matériau de récolte (18, 20-22); et
   - ladite seconde valeur de seuil correspondant à un second niveau inférieur de bruit (71) que ladite composante de bruit ne dépasse pas lorsque ledit mécanisme d'alimentation de matériau de récolte (18, 20-22) fonctionne à vitesse constante;

   de détection du démarrage de l'accélération lorsque ledit mécanisme d'alimentation de matériau de récolte (18, 20-22) est démarré;
   de récupération de ladite première valeur de seuil hors de ladite mémoire lorsque ledit démarrage de l'accélération est détecté, ainsi que d'utilisation de cette première valeur pour établir ledit seuil audit premier niveau (79);
   de récupération de ladite seconde valeur de seuil hors de ladite mémoire après que le mécanisme d'alimentation de matériau de récolte (18, 20-22) a atteint une vitesse constante de fonctionnement, ainsi que d'utilisation de cette seconde valeur pour établir ledit seuil audit second niveau (71), inférieur;
   de comparaison dudit signal de sortie de détecteur avec ledit seuil et de production d'une indication de sortie lorsqu'un objet métallique entraîne le détecteur à produire un signal dépassant ledit seuil établi; et
   d'adaptation dudit second niveau de seuil à une valeur moyenne d'ampleurs des pics (75) de ladite composante de bruit, après que le mécanisme d'alimentation de matériau de récolte (18, 20-22) a atteint une vitesse constante de fonctionnement.

2. Méthode selon la revendication 1, **caractérisée en ce que** la détection du démarrage de l'accélération comprend:

   l'établissement dudit seuil à un troisième niveau (83) inférieur audit second niveau (71) et supérieur à la composante de bruit générée lorsque le mécanisme d'alimentation de matériau de récolte ne fonctionne pas;
   la détection du signal de sortie du détecteur;
   la comparaison de l'ampleur dudit signal avec un seuil établi audit troisième niveau (83); et
   l'exécution de ladite étape d'établissement du premier seuil lorsque ladite ampleur de sortie dépasse ledit troisième niveau.

3. Méthode selon la revendication 1 ou 2, **caractérisée en ce qu'**elle comprend en outre:

   la détection de la composante de bruit du signal de sortie de détecteur, après la détection du démarrage de l'accélération et la récupération de la première valeur de seuil, mais avant la récupération de la seconde valeur de seuil;
   la détermination de la valeur moyenne des ampleurs de pics (75) de la composante de bruit durant cet intervalle d'accélération; et
   l'enregistrement de la valeur de moyenne déterminée dans ladite mémoire afin de la récupérer lors du prochain intervalle d'accélération.

4. Méthode selon l'une quelconque des revendications précédentes, **caractérisée en ce que** ledit seuil est établi audit second niveau (71) après la détection du démarrage de l'accélération dudit mécanisme d'alimentation de matériau de récolte (18, 20-22).

5. Méthode selon l'une quelconque des revendications précédentes, **caractérisée en ce que**:

   ladite composante de bruit dudit signal de sortie de détecteur varie entre des valeurs positives et négatives; et

ledit seuil est un seuil pour ladite composante positive de bruit dudit signal de détecteur; et

ladite méthode comprend en outre:

l'enregistrement des troisième et quatrième valeurs dans une mémoire non volatile,

- ladite troisième valeur de seuil correspondant à un quatrième niveau, négatif, de bruit (81) en deçà duquel la composante négative de bruit du signal de sortie de détecteur ne descend pas lorsque le mécanisme d'alimentation de matériau de récolte (18, 20-22) accélère; et
- ladite quatrième valeur de seuil correspondant à un cinquième niveau de seuil (73) en deçà duquel ladite composante négative de bruit du signal de sortie de détecteur ne descend pas lorsque ledit mécanisme d'alimentation de matériau de récolte (18, 20-22) fonctionne à vitesse constante;

la récupération de ladite troisième valeur de seuil hors de ladite mémoire et l'utilisation de cette troisième valeur pour établir ledit seuil négatif audit quatrième niveau (81), lorsque ledit démarrage de l'accélération est détecté;

la récupération de ladite quatrième valeur de seuil hors de ladite mémoire et l'utilisation de cette quatrième valeur pour établir ledit seuil négatif audit cinquième niveau (73), après que le mécanisme d'alimentation de matériau de récolte (18, 20-22) a atteint une vitesse constante de fonctionnement;

la comparaison dudit signal de sortie de détecteur avec ledit seuil et la production d'une indication de sortie lorsqu'un objet métallique entraîne la génération par le détecteur d'un signal qui descend en deçà dudit seuil négatif établi; et

l'adaptation dudit cinquième niveau de seuil sur la valeur moyenne des ampleurs des pics négatifs (77) de ladite composante de bruit, après que le mécanisme d'alimentation de matériau de récolte (18, 20-22) a atteint une vitesse constante de fonctionnement.

6. Méthode selon l'une quelconque des revendications précédentes, **caractérisée en ce que** ladite récolteuse est une ensileuse (10) et ledit mécanisme d'alimentation de matériau de récolte comprend des rouleaux supérieurs et inférieurs d'alimentation (18, 20-21).

7. Système de détecteur de métaux (32) pour une récolteuse (10) possédant des pièces mobiles incluant un mécanisme d'alimentation de matériau de récolte (18, 20-22) destiné à alimenter du matériau de récolte le long d'un trajet d'alimentation de matériau de récolte,

ledit système de détecteur de métaux (32) étant en mesure de fonctionner pour détecter la présence d'objets métalliques passant le long dudit trajet d'alimentation de matériau de récolte, et comprenant:

au moins une bobine de détection (10/42) disposée dans un champ magnétique de détection et un canal (44/46) lui étant connecté pour produire un signal de sortie de canal incluant une composante de bruit induite par des pièces en mouvement (18, 20-22) de la récolteuse;

une mémoire non volatile destinée à y enregistrer les première et troisième valeurs de seuil,

- ladite première valeur de seuil correspondant à un premier niveau de seuil (79) que ladite composante de bruit du signal de sortie de détecteur ne dépasse pas lorsque ledit mécanisme d'alimentation de matériau de récolte (18, 20-22) accélère; et
- ladite seconde valeur de seuil correspondant à un troisième niveau, inférieur, de seuil (71) que ladite composante de bruit du signal de sortie de détecteur ne dépasse pas lorsque ledit mécanisme d'alimentation de matériau de récolte (18, 20-22) fonctionne à vitesse constante;

des moyens de détection (40/42, 44/46, 54, 56) destinés à détecter lorsque ledit mécanisme d'alimentation de matériau de récolte (18, 20-22) est démarré;

des moyens d'établissement de seuils (56) réagissant auxdits moyens de détection (40/42)

- afin de récupérer ladite première valeur de seuil hors de ladite mémoire et d'utiliser cette valeur pour établir ledit seuil audit premier niveau de seuil (79) au cours de l'intervalle où les moyens de détection détectent l'accélération du mécanisme d'alimentation de matériau de récolte (18, 20-22), et
- afin de récupérer ladite seconde valeur de seuil hors de ladite mémoire et d'utiliser cette valeur pour établir ledit seuil audit second niveau de seuil (71) lorsque les moyens de détection détectent une vitesse constante de fonctionnement du mécanisme d'alimentation de matériau de récolte (18, 20-22);

des moyens de comparaison (56) destinés à comparer ledit signal de sortie avec le seuil établi et à produire une indication de sortie lorsque ledit signal de sortie dépasse ledit seuil;

un filtre passe-bas destiné à déterminer la valeur moyenne de l'ampleur des pics (75) de ladite composante de bruit après que le mécanisme d'alimentation de matériau de récolte (18, 20-22) a atteint une vitesse constante; et

des moyens d'établissement de seuils (56) destinés à adapter ledit second niveau de seuil à ladite valeur moyenne déterminée.

8. Système selon la revendication 7, **caractérisé en ce que** lesdits moyens de détection comprennent:

des moyens (54, 56) destinés à détecter ledit signal de sortie de canal; et

des moyens de comparaison (56) destinés à comparer ledit signal avec un seuil établi au troisième niveau (83) inférieur audit second niveau de seuil (71) mais supérieur au signal de sortie produit lorsque le mécanisme d'alimentation de matériau de récolte (18, 20-22) ne fonctionne pas, et à générer une indication d'accélération lorsque ledit signal de sortie dépasse ledit troisième niveau de seuil (83).

9. Système selon la revendication 7 ou 8, **caractérisé en ce que**:

ladite au moins unique bobine de détection (40/42) et ledit canal (44/46) sont en mesure de fonctionner pour produire un signal de sortie de canal variant entre des valeurs positives et négatives; et

lesdits moyens de comparaison (56) comprennent:

- des moyens de comparaison destinés à comparer ledit signal de sortie avec un niveau positif de seuil (71/79/83); et
- des moyens destinés à comparer ledit signal de sortie avec une valeur négative de seuil (73/81/85); et
- des moyens destinés à produire une indication de sortie lorsque ledit signal de sortie de canal dépasse l'une desdites valeurs de seuil.

10. Système selon l'une quelconque des revendications 7 à 9, **caractérisé en ce que** ladite récolteuse est une ensileuse (10) et ledit mécanisme d'alimentation de matériau de récolte comprend des rouleaux supérieurs et inférieurs d'alimentation (18, 20-21).

FIG. 1

FIG. 2

EP 0 735 385 B1

FIG. 3

RIGHT CHANNEL → PEAK DETECT [80] → FILTER [82] → RPOSF → ÷16 [84]

COMP [88]　COMP [86]　COMP [92]　COMP [90]

EEPROM_ADAPT_RPOSPK-1　EEPROM_ADAPT_RPOSPK+1　ADAPT_THPOSMIN　ADAPT_THPOSMAX

UPDATE EEPROM_ADAPT_RPOSPK TO RPOSF/16 [94]

FIG.4

UPDATE RPOSTH TO EEPROM_ADAPT_RPOSPK∗2 [96]

→ SENSITIVITY SW ADAPT.SENS [98]

START-UP ? [100]

Y

SET ADAPT_RPOSTH FOR START-UP [104]

N

SET ADAPT. RPOSTH [102]

FIG. 5

EP 0 735 385 B1

FIG. 6

```
              ┌─────────────────┐  98
              │ SENSITIVITY SWITCH │
              │  →  ADAPT. SENS  │
              └─────────────────┘
                      │
                      ▼
                  ◇ 106
            CHANNEL SIGNAL    N
              >STTH    ──────────┐
                 ?              │
                 │ Y            ▼
                 ▼           ◇ 108
             ◇ 114        COUNTER = 0    Y
       Y   FEEDROLL          ?    ──────────┐
   ┌──── STOPPED FLAG        │ N            │
   │        = l           ┌──────────┐ 122   ┌──────────────┐ 110
   ▼ 116     ?            │ DECREMENT │      │ FEEDROLL STOPPED │
┌────────────┐   N       │ COUNTER  │      │   FLAG = l    │
│ ACCELERATION│           └──────────┘      └──────────────┘
│ TIMER = 250 │              │                  │
└────────────┘              │                  │
      │                     │                  │
      ▼                     │                  │
  ┌──────────────┐ 118      │                  │
  │  COUNTER = 250│◄─────────┴──────────────────┘
  │ FEEDROLL STOPPED│
  │    FLAG = 0   │
  └──────────────┘
         │
         ▼
      ◇ 112
  ACCELERATION      Y
   TIMER = 0   ──────────┐
      ?                  │
      │ N                ▼
      ▼ 120          ┌──────────┐ 102
  ┌──────────────┐   │   SET    │
  │  DECREMENT   │   │ADAPT. RPOSTH│
  │ACCELERATION TIMER│ └──────────┘
  │SET THRESHOLDS TO│      │
  │ STARTUP LEVELS │      │
  └──────────────┘      │
         │               │
         └───────┬───────┘
                 ▼
```